Europäisches Patentamt

European Patent Office

Office européen des brevets

(11) Publication number: **0 268 837 B1**

# EUROPEAN PATENT SPECIFICATION

(45) Date of publication of patent specification: **02.01.92**

(51) Int. Cl.<sup>5</sup>: **C08G 75/14**, C08L 81/04, C08L 81/02, C08G 75/12, B65D 53/00, //(C08L81/04, 61:04)

(21) Application number: **87115514.9**

(22) Date of filing: **22.10.87**

(54) A storage container and method for sealing same.

(30) Priority: **14.11.86 US 931228**

(43) Date of publication of application:
**01.06.88 Bulletin 88/22**

(45) Publication of the grant of the patent:
**02.01.92 Bulletin 92/01**

(84) Designated Contracting States:
**AT BE CH DE ES FR GB GR IT LI LU NL SE**

(56) References cited:
**EP-A- 0 217 506**
**DE-A- 2 112 157**
**DE-A- 2 335 431**

(73) Proprietor: **Products Research and Chemical Corporation**
**5430 San Fernando Road**
**Glendale, CA 91209(US)**

(72) Inventor: **Sharaby, Ahmed**
**29039 Flower Park Drive**
**Canyon Country California 91351(US)**

(74) Representative: **KUHNEN, WACKER & PARTNER**
**Alois-Steinecker-Strasse 22 Postfach 1553**
**W-8050 Freising(DE)**

Rank Xerox (UK) Business Services

**Description**

Background of the Invention

The present invention relates to storage containers for storing hydrocarbon fuels, said container having a fluid impermeable housing with a seal between opposed mating surfaces secured together. The seal is a solid elastomer which has substantially low permeability to hydrocarbon fuel vapors. The seal is formed by using thioether mercaptan terminated disulfide liquid polymer compositions which cure to solid elastomers and surprisingly exhibit substantially decreased permeability to hydrocarbon fuels and vapors in addition to having other desireable properties including excellent thermal stability, high tensile strength, and improved adhesion after being in contact with hydrocarbon fuel. The polymer compositions of the present invention are produced through the chemical modification of standard polysulfide polymers by coreaction with alkyl thioether dithiols of from 4 to 20 carbon atoms. The low hydrocarbon fuel permeability sealing compositions of the present invention are particularly useful in sealing hydrocarbon fuel storage structures.

The thioether mercaptan terminated disulfide liquid polymer compositions are disclosed and claimed in EP-A-217506, published after the priority date, said application having the same assignee as the instant application. However, said application also discloses polymer compositions other than those used to provide seals in the present invention. The other polymer compositions disclosed in the application do not possess the unique property of very low permeability to hydrocarbon fuel vapors which the thioether mercaptan terminated disulfide liquid polymer compositions disclosed herein have. This unique property makes the instant polymer compositions particularly useful for forming seals in the hydrocarbon fuel storage containers of the present invention.

In addition, standard fuel resistant sealants based upon polysulfide polymers also do not have the unique property of very low permeability to hydrocarbon fuel vapors. Such polysulfide polymers are commercially available under the name Thiokol® LP polysulfides. Examples of such polysulfide polymers are disclosed in U.S.-A-2,466,963. Typically, polysulfide polymers prepared in accordance with the teachings of this earlier patent have molecular weights on the order of 1000 to 8000 and are viscous liquids having viscosities ranging from 1500 to 150,000 MPa.sec. These polymers are formed of repeating units of diethyl formal disulfide with terminal mercaptan groups (hereinafter referred to as "diethyl formal mercaptan terminated polysulfides"). When such polymers are cured they form hardened rubber-like solids exhibiting a number of desireable properties including resistance to oil, organic liquids, water, ozone and sunlight. Additionally, these prior art polymers are relatively impermeable to gasses and moisture. As a result, prior art diethyl formal mercaptan terminated polysulfides are widely used in sealants.

In sealant applications involving the transportation and storage of hydrocarbon fuels, it is essential that the fuel storage structures are effectively and reliably sealed against escape of the fuel, including the vapors. In certain applications involving extreme movement of hydrocarbon fuel storage structures, such as those found in aircraft fuel tanks, highly adherent sealants based on diethyl formal mercaptan terminated polysulfide polymers are used which tolerate such movements without failure and are useful over a broad temperature range. Though somewhat useful at preventing fuel loss in such applications, there is a distinct need in the art to improve upon these prior art elastomeric compositions by decreasing their permeability to hydrocarbon fuel. The permeability of these prior art sealants to the passage of hydrocarbon vapors contributes to the overall loss of fuel and, given sufficient time, may lead to the accumulation of fuel vapors in closed areas or the condensation of fuel vapors onto surfaces and components formed of materials which are not resistant to hydrocarbon fuels.

Accordingly, it is a principal object of the present invention to provide an improved elastomeric polymer based sealant having a significantly decreased permeability to hydrocarbon fuel vapors. It is a further object of the present invention to achieve this decrease in hydrocarbon fuel vapor permeability while maintaining or improving other desireable properties including high tensile strength, high tear strength, resistance to higher temperatures, resistance to ultraviolet light, and high adhesion after exposure to organic liquids as well as tolerance to vibratory and translatory movements of fuel storage structures. It is a further object of the present invention to provide an improved structure for the storage of hydrocarbon fuels which more effectively prevents fuel loss by significantly reducing the passage of hydrocarbon fuels and fuel vapors through the elastomeric polymer based sealants utilized to seal the joints of such structures.

These and other objects are achieved by the thioether mercaptan terminated disulfide liquid polymer compositions of the present invention which, when cured, exhibit significantly reduced hydrocarbon fuel permeability without sacrificing strength, resistance to environmental attack, or adhesive ability.

Summary of the Invention

In accordance with the teachings of the present invention, thioether mercaptan terminated disulfide liquid polymer compositions are provided which, when cured to solid elastomers, exhibit a large decrease in hydrocarbon fuel permeability without sacrificing other desireable properties including high tensile strength, adhesion after exposure to fuel, and resistance to environmental factors including ozone and sunlight.

The present invention is based on the surprising discovery that when standard fuel resistant liquid diethyl formal mercaptan terminated polysulfide polymers are modified through coreacting with small quantities (amounts from 1.5% to 10% by weight) of alkyl thioether dithiols of from 4 to 20 carbon atoms, the resulting cured elastomeric compositions therefrom exhibit a significant decrease in hydrocarbon fuel permeability. Such improvements in fuel impermeability are not observed with analogous formulations modified through coreactions with alkyl ether dithiols.

During the coreaction process, one of the reaction products is a chemically modified diethyl formal polysulfide having thioether linkages and mercaptan terminals ("thioether mercaptan terminated disulfide polymers"). Because this reaction cleaves one or more of the disulfide linkages of the starting liquid diethyl formal mercaptan terminated polysulfide, a second reaction product is formed which is identical to the starting liquid diethyl formal mercaptan terminated polysulfide except that it has a lower molecular weight. As a result, the overall molecular weight of the starting material decreases from between 2000 and 8000 to between 1000 and 4000. Those skilled in the art will appreciate that not all of the starting diethyl formal mercaptan terminated polysulfide is reacted in this process. Thus, some of the starting diethyl formal mercaptan terminated polysulfide is present in the modified disulfide liquid polymer composition produced in accordance with the teachings of the present invention.

The resulting chemically modified disulfide liquid polymer composition (hereinafter referred to as "thioether mercaptan terminated disulfide liquid polymer composition") will have an average molecular weight of between 1000 to 4000 and a viscosity of between 1500 to 45,000 MPa.sec at 25$^{\circ}$C. The thioether mercaptan terminated disulfide liquid polymer composition will contain at least 25 mole percent of thioether mercaptan terminated disulfide, based upon the total moles of thioether mercaptan terminated disulfide polymer and diethyl formal mercaptan terminated polysulfide present in the liquid polymer composition and may include up to 90 mole percent of thioether mercaptan terminated disulfide.

When the thioether mercaptan terminated disulfide liquid polymer compositions of the present invention are cured, they possess the desireable properties of the original diethyl formal mercaptan terminated polysulfide sealants in that the cured elastomers are resistant to oil, organic liquids, water, acids, alkalis, ozone and sunlight. More importantly, in addition to these properties, the hydrocarbon fuel permeability of the cured polymer compositions is reduced by approximately 40%.

In order to effectively and reliably seal a hydrocarbon fuel storage structure against leakage, the liquid polymer compositions of the present invention are cured to a solid elastomer sealing material in a conventional manner. Accordingly, an improved storage structure for reliably containing hydrocarbon fuels without leakage or significant vapor loss may be formed of a flexible or rigid fuel impermeable housing for containment of hydrocarbon fuel with a low hydrocarbon fuel permeability polymer based solid elastomer seal, produced in accordance with the teachings of the present invention, disposed between opposing mating surfaces or joints in the storage structure.

The production of the sealants involves the cleaving of the disulfide linkages of diethyl formal mercaptan terminated polysulfides with a specific quantity of an alkyl thioether dithiol organic cleaving compound to form thioether mercaptan terminated disulfide polymer composition yielding sealant having an exceptionally low permeability to hydrocarbon fuel. Depending upon the amount of alkyl thioether dithiol utilized in the reaction relative to the amount of starting diethyl formal mercaptan terminated polysulfide, the resulting reaction product will comprise a liquid polymer composition, curable to a solid elastomer exhibiting the desired low permeability properties, which may contain up to 90 mole percent of the thioether mercaptan terminated disulfide polymers. The remaining portion of the mixture will comprise diethyl formal mercaptan terminated polysulfides. Accordingly, the chemically modified liquid polymer composition of the present invention will contain from 25 mole percent to 90 mole percent of thioether mercaptan terminated disulfide polymers and from 10 mole percent to 75 mole percent of diethyl formal mercaptan terminated polysulfides.

There is basically a uniform distribution of polymer molecular weight in this composition because an equilibration occurs in the reaction mixture. Accordingly, the average molecular weight of the liquid polymer composition of the present invention will range from between 1000 and 4000.

The thioether mercaptan terminated disulfide polymer produced in accordance with the teachings of the present invention will have the formula $HS(RSS)_mR'SH$ wherein R is $-C_2H_4-O-CH_2-O-C_2H_4-$, R′ is an alkyl thioether of from 4 to 20 carbon atoms, and the value of m is such that the molecular weight of the mercaptan terminated disulfide polymer composition is between 1000 to 4000. Accordingly, generally speaking the value of m will be between 5 to 25 and preferably between 5 to 15, depending on the molecular weight of the alkyl thioether of R'.

The dimercaptan alkyl thioether cleaving compound will have the formula $R'(SH)_2$, where R' has the same significance as discussed above.

The diethyl formal mercaptan terminated polysulfide polymer included in the liquid composition of the present invention will have the formula $HS(RSS)_nRSH$ wherein R has the formula $-C_2H_4-O-CH_2-O-C_2H_4-$ and the value of n will be such that the molecular weight of the diethyl formal mercaptan terminated polysulfide polymer is between 1000 and 4000. Thus, the value of n will range from 5 to 25 and, preferably, from 5 to 15.

Those skilled in the art will appreciate that the starting diethyl formal mercaptan terminated polysulfide will have an identical structure to the cleaved diethyl formal mercaptan terminated polysulfide reaction product discussed above except that the starting polysulfide will have a molecular weight of from 2000 to 8000.

The preferred starting diethyl formal mercaptan terminated polysulfides are those available under the name "Thiokol"® polysulfides. These compounds are commercially produced through the condensation of dichlorodiethyl formal with an alkali polysulfide in the presence of a polyfunctional branching agent such as 1, 2, 3-trichloropropane. The addition of the branching agent produces a branched polymer whereas a linear polymer would be produced if no branching agent is utilized.

The Thiokol® polysulfides contemplated for use in the present invention are those in which R is diethyl formal and are commercially available in various grades known as LP-2, LP-12, LP-31, and LP-32 or mixtures of these compounds. All of these polymers are produced and sold by Morton Thiokol Chemical Corporation, Chicago, Illinois. Exclusive of LP-31, all of these polymers have a molecular weight of approximately 4000 and a viscosity of approximately 45,000 MPa.sec at 25°C. LP-31 has a molecular weight of approximately 8000 and a viscosity of approximately 150,000 MPa.sec at 25°C. Other molecular weight grades and types of liquid Thiokol® polysulfides may be utilized to practice the present invention with results similar to those achieved with the preferred LP-2, LP-12, LP-31, and LP-32 formal mercaptan terminated polysulfide reactants, providing the repeating unit of any alternative liquid polysulfide is diethyl formal disulfide.

The cleavage reaction is carried out by mixing the diethyl formal mercaptan terminated polysulfide with the alkyl thioether dithiol, the molar ratio of the dithiol cleaving compound relative to diethyl formal mercaptan terminated polysulfide being 0.3:1 to 9:1 which will produce a mole percentage ranging from 25 mole percent to 90 mole percent, respectively.

In conducting the reaction, it is preferred that the reaction mixture be maintained at or about ambient temperature, though temperature is not particularly critical to the reaction. Accordingly, the preferred temperature will range from between 25°C and 100°C. Preferably, reaction will be carried out under an inert atmosphere such as nitrogen.

Though reaction will proceed without the presence of a catalyst, reaction times in the absence of catalysts may exceed 40 hours. As a result, the process is not economically viable without the addition of a catalyst. Organic amine catalysts are preferred as they considerably reduce the reaction time. Preferred organic amine catalysts are organic tertiary amines, specifically triethyl amine, diazabicyclo (2, 2, 2) octane (DABCO), diazabicycloundecene (DBU) and tetramethylguanidine (TMG). The preferred catalysts are DBU and TMG. Reaction times in the presence of the preferred organic tertiary amine catalysts range from between 1 hour to 20 hours.

Other than providing a catalytically effective amount, the quantity of organic amine catalyst utilized is not particularly critical. Based upon the total weight of the starting reactants, it is preferred that the amount of catalyst will range between 0.001 weight percent and 3.0 weight percent. However, it should be noted that quantities of catalyst greater than approximately 0.1 weight percent may alter the cure rate of the sealing composition. Accordingly, it is preferred to use less than 0.1 weight percent of the organic amine catalyst to avoid possible later problems.

Preferred alkyl thioether dithiols for obtaining the thioether mercaptan terminated disulfide liquid polymer composition of the present invention will have from 4 to 20 carbon atoms. The preferred alkyl thioether dithiol is dimercaptodiethyl sulfide having 4 carbon atoms such that R' in the organic dimercaptan cleaving compound having the general formula $R'(SH)_2$ has the formula $-CH_2-CH_2-S-CH_2-CH_2-$.

Curing the thioether mercaptan terminated disulfide liquid polymer composition is accomplished in the same manner and with the same curing agents as is done with conventional mercaptan terminated polymers. These procedures and curing agents are well known in the art and include, for example, the curing procedures and curing agents of U.S.-A-3,629,206. The cure procedures include two component oxidation and epoxide addition cures. When cured in these conventional manners, the disulfide polymer

4

compositions disclosed herein exhibit markedly decreased permeability to hydrocarbon fuels in addition to improved thermal stability and hence are applicable over a broad temperature range. Similarly, these polymer compositions exhibit enhanced tensile strength both before and after environmental exposure to water and hydrocarbon fuels.

Description of the Drawings:

Fig. 1 is a fragmentary perspective of a housing of a storage container for hydrocarbon fuels adapted for use in a wing (outlined phantom lines), the housing having a bottom wall and a top wall which is not shown.

Fig. 2 is an enlarged fragmentary sectional view taken in the vertical plane indicated by line II-II of Fig. 1.

Description of the Preferred Embodiments.

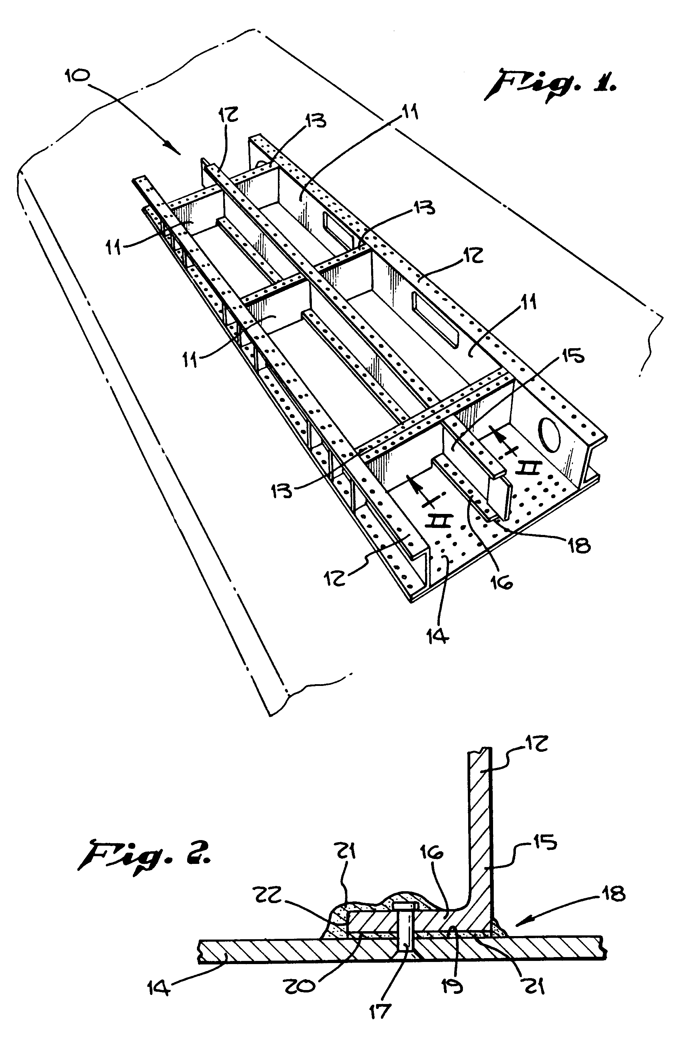

Turning first to Fig. 1, there is shown a portion of a rigid fluid impermeable housing (the top wall not being shown) indicated generally at 10. This housing is in a wing as indicated by the phantom lines and has a number of compartments 11 for storing hydrocarbon fuels, the compartments 11 being formed from longitudinal channels 12, cross-members 13 extending between, and secured to, the longitudinal channel 12, bottom wall 14 and a top wall not shown. The longitudinal channels 12 have a web 15 and a flange 16 which is secured to bottom wall 14 by fastening means which, in the preferred exemplary embodiment is rivet 17. A joint 18 is formed between opposed mating surfaces 19 and 20.

Prior to securing bottom wall 14 to flange 16 there is applied to the mating opposed surfaces 19 and 20 a sealing effective amount of the sealing composition 21 of the present invention to form a seal between the surfaces 19 and 20. The sealing composition 21 is allowed to stand at ambient temperature until it cures to a solid elastomer and the rivet 17 is used to secure the flange 16 to bottom wall 14. Thereafter sealing composition 21 is placed over the unit 17 on the side in contact with the hydrocarbon fuel and over the edge 22 of flange 16 to provide an effective seal to prevent loss of hydrocarbon fuel.

The sealing composition may also be used in non-rigid hydrocarbon storage containers, such as fuel bags made of rubber coated nylon or polyester. The sealant is applied to the joint of two pieces of fabric which have been secured, e.g. by sewing or are bonded together with an adhesive.

In order to more fully illustrate the present invention, the following non-limiting examples are given.

EXAMPLE I

A preferred low fuel permeability modified disulfide polymer composition, designated "Formula I" was prepared in the following manner. 1,900 grams of Thiokol® LP-2 (molecular weight 4,000), 2,400 grams of Thiokol® LP-31 (molecular weight 8,000) and 700 grams of LP-12 (molecular weight 4,000) were mixed with 292 grams of dimercaptodiethyl thioether and 0.1 gram of DBU. This mixture was heated for 6 hours at 70°C to produce a liquid polymer composition having about 65 percent by weight thioether mercaptan terminated disulfide polymer.

EXAMPLE II

In order to demonstrate the efficacy of the preferred low fuel permeability modified disulfide polymer compositions of the present invention a formulation equivalent to Formula I was prepared in which the alkyl thioether dithiol was replaced with an equivalent molar amount of dimercaptodiethyl ether (262 grams). The mixture was heated for 10 hours at 7°C to produce a modified mercaptan terminated polymer composition having disulfide linkages. (Formula II).

EXAMPLE III

A conventional, unmodified Thiokol® liquid polymer blend was prepared as an additional control and designated "Formula III".

COMPARISON OF FUEL PERMEABILITY

EXAMPLE IV

As set forth in the following table, essentially identical sealant formulations were prepared, Formula I containing 5.8% by weight dimercaptodiethyl thioether, the second, Formula II, containing 5.2% by weight dimercaptodiethyl ether, and the third, Formula III, being an unmodified Thiokol® polymer blend having an essentially equal molecular weight to the polymer formulations of Examples I and II.

| Base Composition | Formulations – Parts By Weight | | |
|---|---|---|---|
| | I | II | III |
| LP-Thiokol®, chemically modified with 5.8% dimercaptodiethyl thioether per Preparation I | 100 | | |
| LP-Thiokol® chemically modified with 5.2% dimercaptodiethyl ether per Preparation II. | | 100 | |
| LP-Thiokol® blend | | | 100 |
| Phenolic Resin | 10 | 10 | 10 |
| Titanium Dioxide | 4 | 4 | 4 |
| Calcium Carbonate | 60 | 60 | 60 |
| Thiocarbamate Catalyst | 1 | 1 | 1 |

Cured samples of each of the compositions were prepared by mixing 100 parts of each base composition with 10 parts of an accelerator composition formulated as follows:

| Accelerator Composition | I | II | III |
|---|---|---|---|
| Manganese Dioxide | 60 | 60 | 60 |
| Semi-Aromatic Oil | 30 | 30 | 30 |
| Stearic Acid | 0.5 | 0.5 | 0.5 |
| Diphenyl Guanidine | 5 | 5 | 5 |

After mixing with the accelerator composition, the samples were pressed out into 50 mil sheets. These sheets were cured for 14 days at room temperature. At that time, 3-inch diameter discs were cut from the sheet and were bolted on to a flanged aluminum cup containing 10 grams of jet reference fluid, Type 7. The jet reference fluid had the following composition:

| Composition | Parts by Volume |
|---|---|
| Toluene | 30 |
| Cyclohexane | 60 |
| Isooctane | 10 |
| Tertiary Dibutyl Disulfide | 1 |
| Tertiary Butyl Mercaptan | 0.015 by weight |

Each cup containing 10 grams of jet reference fluid sealed by the cured elastomer sheet was exposed to 25° C for 30 days. The permeability was determined by measuring the weight loss of fuel from each cup, calculated as the volume loss per square foot per day as set forth in Mil-T- 27422 Revision B.

### Permeability Results
### Formulations

| | I | II | III |
|---|---|---|---|
| Loss in fluid ounces @ 25°C, per square foot per day | 0.14 | 0.24 | 0.25 |

The foregoing results clearly demonstrate that the exemplary preferred liquid polymer composition of the present invention (Formulation I) has a hydrocarbon fuel permeability approximately 40% below that of the corresponding unmodified cured elastomer material (Formulation III). More significantly, the corresponding dimercaptodiethyl ether compound (Formulation II) did not exhibit this significantly reduced hydrocarbon fuel permeability.

## Claims

1. A method for sealing a hydrocarbon fuel storage container to substantially prevent loss of hydrocarbon fuel and hydrocarbon fuel vapor therefrom, said container having a fluid impermeable housing provided with at least one joint defined by opposed mating surfaces which comprises:
   applying a liquid polymer sealant composition to said opposed mating surfaces and filling said joint with a liquid polymer sealant composition to form a seal, said liquid polymer sealant composition consisting essentially of
   (a) a mixture of from 90 mole percent to 25 mole percent of thioether mercaptan terminated polymer of the formula $HS(RSS)_mR'SH$ and from 10 mole percent to 75 mole percent of diethyl formal mercaptan terminated polymer of the formula $HS (RSS)_nRSH$; wherein in the formulae R is $-C_2H_4-O-CH_2-O-C_2H_4-$; R' is alkyl thioether of from 4 to 20 carbon atoms and the value of m and n is such that the polymer mixture has an average molecular weight of between 1000 and 4000; and
   (b) a curing agent; and allowing said liquid polymer composition to cure to a solid elastomer.

2. A method according to Claim 1 wherein said hydrocarbon fuel storage container is rigid.

3. A method according to Claim 2 wherein said rigid hydrocarbon fuel storage container is the wing of an airplane.

4. A method according to Claim 1 wherein the hydrocarbon fuel storage container is flexible.

5. A method according to Claim 1 wherein R' is an alkyl thioether having 4 carbon atoms.

7

EP 0 268 837 B1

**6.** A method according to Claim 1 wherein said curing agent is from 2 percent to 10 percent by weight manganese dioxide.

**7.** A storage container for effectively containing hydrocarbon fuels over a broad temperature range without significant loss of hydrocarbon fuel vapors which comprises:

a fluid impermeable housing for containing hydrocarbon fuel with at least one seal disposed between opposed mating surfaces secured together, said seal being a solid elastomer of a cured liquid polymer composition consisting essentially of a mixture of

from 90 mole percent to 25 mole percent of thioether mercaptan terminated polymer of the formula $HS \, (RSS)_m R'SH$ and

from 10 mole percent to 75 mole percent of diethyl formal mercaptan terminated polymer of the formula $HS \, (RSS)_n RSH$; wherein in the formula R is $-C_2H_4-O-CH_2-O-C_2H_4-$; R' is an alkyl thioether of from 4 to 20 carbon atoms and the value of m and n is such that the polymer mixture has an average molecular weight of between 1000 and 4000.

**8.** A storage container according to Claim 7 wherein said container is rigid.

**9.** A storage container according to Claim 8 wherein the container is the wing of an airplane.

**10.** A storage container according to Claim 7 wherein said container is flexible.

**11.** A storage container according to Claim 7 wherein R' is an alkyl thioether having 4 carbon atoms.

**Revendications**

**1.** Un procédé pour rendre étanche un récipient de stockage de fuel hydrocarboné pour pratiquement empêcher des pertes de fuel hydrocarboné et de vapeur de ce fuel hydrocarboné, ce récipient comportant un conteneur imperméable au fluide pourvu d'au moins un joint défini par des surfaces de jointement opposées, lequel procédé consiste:

- à appliquer une composition de joint polymère liquide auxdites surfaces de jointement opposées et à remplir ledit joint d'une composition de jointoiement polymère liquide pour former un joint, cette composition de jointoiement polymère liquide étant essentiellement formée de:

(a) un mélange de 90% en mole et 25% en mole d'un polymère à terminaison thioéther mercaptan de formule $HS(RSS)_m R'SH$, et d'environ 10% en mole à 75% en mole de polymère à terminaison diéthylformal mercaptan de formule $HS(RSS)_n RSH$; dans lesquelles formules, R est $-C_2H_4-O-CH_2-O-C_2H_4-$; R' est un thioéther d'alkyle comprenant 4 à 20 atomes de carbone et les valeurs de m et n sont telles que le mélange de polymère présente un poids moléculaire moyen compris entre 1 000 et 4 000; et

(b) un agent de durcissement;

et

- à laisser durcir ladite composition polymère liquide jusqu'à l'obtention d'un élastomère solide présentant une faible perméabilité aux vapeurs de fuel hydrocarboné.

**2.** Un procédé selon la revendication 1, dans lequel ledit récipient de stockage de fuel hydrocarboné est rigide.

**3.** Un procédé selon la revendication 2, dans lequel ledit récipient de stockage de fuel hydrocarboné rigide est l'aile d'un aéronef.

**4.** Un procédé selon la revendication 1, caractérisé en ce que le récipient de stockage de fuel hydrocarboné est flexible.

**5.** Un procédé selon la revendication 1, dans lequel R' est un thioéther d'alkyle comprenant 4 atomes de carbone.

**6.** Un procédé selon la revendication 1, caractérisé en ce que l'agent de durcissement est formé de 2 à 10% en poids de dioxyde de manganèse.

8

7. Un récipient de stockage pour contenir de façon efficace des fuels hydrocarbonés sur une large gamme de températures sans perte significative des vapeurs de fuel hydrocarboné, qui comprend un conteneur imperméable au fluide pour contenir le fuel hydrocarboné, muni d'au moins un joint disposé entre deux surfaces de jointement opposées fixées l'une à l'autre, ce joint étant formé d'un élastomère solide formé à partir d'une composition d'un polymère liquide durci essentiellement formée d'un mélange de 90% en mole à 25% en mole de polymère à terminaison thioéther mercaptan de formule $HS(RSS)_m R'SH$ et de 10% en mole à 75% en mole d'un polymère à terminaison diéthylformal mercaptan de formule $HS(RSS)_n RSH$, dans lesquelles R est $-C_2H_4-O-CH_2-O-C_2H_4-$; R' est un thioéther d'alkyle comprenant 4 à 20 atomes de carbone et les valeurs de m et n sont telles que le mélange de polymère présente un poids moléculaire moyen compris entre 1 000 et 4 000.

8. Un récipient de stockage selon la revendication 7, caractérisé en ce que ledit récipient est rigide.

9. Un récipient de stockage selon la revendication 8, caractérisé en ce que le récipient est l'aile d'un aéronef.

10. Un récipient de stockage selon la revendication 7, caractérisé en ce que ledit récipient est flexible.

11. Un récipient de stockage selon la revendication 7, caractérisé en ce que R' est un thioéther d'alkyle comprenant 4 atomes de carbone.

## Patentansprüche

1. Ein Verfahren zum Abdichten eines Lagerbehälters für Kohlenwasserstoffbrennstoff, um im wesentlichen einen Verlust von Kohlenwasserstoffbrennstoff und Kohlenwasserstoffbrennstoffdampf daraus zu verhindern, wobei der Behälter ein flüssigkeitsundurchlässiges Gehäuse mit wenigstens einer Stoßstelle besitzt, die von gegenüberliegenden zusammenpassenden Oberflächen begrenzt wird, welches umfaßt: man bringt eine flüssige polymere Dichtungsmasse auf die gegenüberliegenden zusammenpassenden Oberflächen auf und füllt die genannte Verbindungsstelle mit einer flüssigen polymeren Dichtungsmasse zur Bildung einer Dichtung, wobei die flüssige polymere Dichtungsmasse im wesentlichen besteht aus:

a) einem Gemisch aus 90 bis 25 Mol-Prozent polymerem Thioether mit Mercaptan-Endgruppen der Formel $HS(RSS)_m R'SH$ und 10 bis 75 Mol-Prozent eines polymeren Diethylformals mit Mercaptan-Endgruppen der Formel $HS(RSS)_n RSH$; wobei in den Formeln R $-C_2H_4-O-CH_2-O-C_2H_4-$ ist; R' ein Alkylthioether mit 4 bis 20 Kohlenstoffatomen ist und der Wert für m und n so ist, daß das polymere Gemisch ein durchschnittliches Molekulargewicht von zwischen 1000 und 4000 besitzt; und
b) einem Aushärtungsmittel;

und läßt die flüssige Polymermasse zu einem festen Elastomeren aushärten.

2. Verfahren nach Anspruch 1, wobei der Lagerbehälter für Kohlenwasserstoffbrennstoff starr ist.

3. Verfahren nach Anspruch 2, wobei der starre Lagerbehälter für Kohlenwasserstoffbrennstoff in dem Flügel eines Flugzeugs ist.

4. Verfahren nach Anspruch 1, wobei der Lagerbehälter für Kohlenwasserstoffbrennstoff flexibel ist.

5. Verfahren nach Anspruch 1, wobei R' ein Alkylthioether mit 4 Kohlenstoffatomen ist.

6. Verfahren nach Anspruch 1, wobei das Härtungsmittel von 2 bis 10 Gewichtsprozent Mangandioxid ist.

7. Lagerbehälter zum wirksamen Einschließen von Kohlenwasserstoffbrennstoffen über einen breiten Temperaturbereich ohne wesentlichen Verlust von Kohlenwasserstoffbrennstoffdämpfen, umfassend: ein flüssigkeitsundurchlässiges Gehäuse zum Einschließen des Kohlenwasserstoffbrennstoffs mit wenigstens einer Dichtung, die zwischen miteinander befestigten gegenüberliegenden zusammenpassenden Oberflächen angeordnet ist, wobei die Dichtung ein festes Elastomer einer ausgehärteten flüssigen Polymermasse ist, die im wesentlichen besteht aus einem Gemisch aus 90 bis 25 Mol-Prozent Thioetherpolymerisat mit Mercaptan-Endgruppen der Formel $HS(RSS)_m R'SH$

und

von 10 bis 75 Mol-Prozent eines Diethylformalpolymeren mit Mercaptan-Endgruppen der Formel HS-$(RSS)_n$RSH; wobei in der Formel R $-C_2H_4-O-CH_2-O-C_2H_4-$ ; R'ein Alkylthioether von 4 bis 20 Kohlenstoffatomen sind und der Wert für m und n so ist, daß das polymere Gemisch ein durchschnittliches Molekulargewicht von zwischen 1000 und 4000 besitzt.

8. Lagerbehälter nach Anspruch 7, wobei der Behälter starr ist.

9. Lagerbehälter nach Anspruch 8, wobei der Behälter in der Tragfläche eines Flugzeugs ist.

10. Lagerbehälter nach Anspruch 7, wobei der Behälter flexibel ist.

11. Lagerbehälter nach Anspruch 7, wobei R' ein Alkylthioether mit 4 Kohlenstoffatomen ist.

*Fig. 1.*

*Fig. 2.*